# FASCICULE DE BREVET EUROPEEN

(11) **EP 2 660 161 B1**
(45) Date de publication et mention de la délivrance du brevet: **26.07.2017**
(21) Numéro de dépôt: 12166912.1
(22) Date de dépôt: 04.05.2012
(51) Int. Cl.: A23F 3/00, B02C 4/02, B02C 4/30, B02C 4/42, B65B 31/02, B65B 29/02, B65B 59/04

(54) **CONDITIONNEMENT DE FEUILLES SÉCHÉES EN CAPSULES HERMÉTIQUES**
VERPACKUNG VON GETROCKNETEN BLÄTTERN IN HERMETISCH VERSCHLOSSENEN KAPSELN
PACKAGING OF DRIED SHEETS IN SEALED CAPSULES

(43) Date de publication de la demande: 06.11.2013
(60) Demande divisionnaire: 15167200.3
(73) Titulaire: Tpresso AG, 8008 Zürich (CH)
(72) Inventeur: Favre, Eric, 1040 St-Barthélemy (CH)
(74) Mandataire: Troesch Scheidegger Werner AG

(56) Documents cités:
- WO-A1-2008/129350
- WO-A1-2010/007633
- GB-A- 238 391
- GB-A- 281 922
- GB-A- 820 726
- US-A- 2 533 550

## Description

La présente invention concerne un procédé de conditionnement de feuilles séchées alimentaires en capsules hermétiques. Les feuilles séchées comprennent notamment des thés, tisanes et herbes aromatiques.

Il est connu de réaliser des capsules hermétiques contenant des substances telles que du café, des bouillons ou du thé dans des capsules hermétiques pour la préparation de boissons chaudes. Typiquement, la capsule scellée hermétiquement est placée dans une machine comprenant une tête d'injection et une paroi de fond perforatrice, la tête d'injection perforant une paroi de la capsule pour l'injection d'eau chaude dans la capsule, et la paroi perforante ouvrant une paroi opposée de la capsule pour l'extraction de la boisson après le passage de l'eau à travers la substance contenue dans la capsule. Le conditionnement des substances telles que du café ou du thé dans des capsules hermétiques permet de préserver les propriétés de la substance pendant une durée relativement longue et ce jusqu'au moment de la préparation de la boisson.

Dans le cas du thé, l'on a deux situations : le thé est soit mis dans la capsule sous forme de feuilles séchées entières, soit sous forme de feuilles de thé séchées découpées en morceaux. Lorsque les feuilles sont entières, le temps d'extraction est plus long en raison de la surface plus faible comparée à une extraction à partir de feuilles coupées. Dans le cas de l'extraction du thé à partir de capsules par des machines d'injection d'eau, il est avantageux d'avoir un temps d'extraction aussi court que possible en raison du fonctionnement de la machine. En effet, un temps d'extraction de trois à cinq minutes, ce qui serait typique pour la préparation d'un thé dans une tasse ou dans une théière à partir d'un sachet ou de feuilles libres, ne serait pas acceptable pour la préparation d'un thé à partir de capsules par une machine d'extraction. D'ailleurs, que cela soit pour des feuilles de thé entières ou des feuilles découpées, l'oxydation de la surface réduit les qualités gustatives et olfactives du thé, ce problème étant aggravé lorsque les feuilles de thé sont découpées en petits morceaux. La pensée conventionnelle est donc de maintenir les feuilles entières pour assurer une grande qualité gustative, l'inconvénient étant un long temps d'extraction.

Le problème décrit ci-dessus peut également affecter des feuilles d'autres plantes alimentaires séchées, par exemple des herbes aromatiques.

Le document US2533550A divulgue une machine et un procédé pour le conditionnement de feuilles séchés de plantes dans une capsule hermétique selon le préambule de la revendication 1 et selon le préambule de la revendication 14. Un objet de l'invention est de réaliser un procédé de conditionnement de feuilles séchées de plantes alimentaires en capsules hermétiques et une machine pour la mise en oeuvre du procédé qui permettent de préparer une boisson ou un liquide alimentaire avec d'excellentes propriétés gustatives et aromatiques.

Un objet particulier de l'invention est de réaliser un procédé de conditionnement de feuilles de thé séchées en capsules hermétiques et une machine pour la mise en oeuvre du procédé qui permettent de préparer un thé avec d'excellentes propriétés gustatives et aromatiques.

Il est avantageux de fournir un procédé et une machine pour le conditionnement de thé ou d'un autre produit alimentaire en capsules qui permettent de préparer un thé ou autre liquide alimentaire en peu de temps.

Il est avantageux de fournir un procédé et une machine pour le conditionnement de thé ou d'un autre produit alimentaire en capsules hermétiques qui permettent de préparer un thé ou autre liquide alimentaire avec un très bon taux d'extraction des substances contenues dans les feuilles séchées.

Des buts de l'invention sont réalisés par le procédé selon la revendication 14 et une machine pour le conditionnement de feuilles séchées de plantes en capsules hermétiques selon la revendication 1.

Dans la présente invention, on décrit un procédé de conditionnement de plantes alimentaires séchées, notamment de thé, dans une capsule hermétique, comprenant la brisure des feuilles séchées entières dans un environnement de gaz non-oxydant, l'insertion des feuilles brisées dans une capsule dans un environnement de gaz non-oxydant et la fermeture hermétique de la capsule. La brisure comprend une flexion des feuilles séchées jusqu'à leur rupture par flexion. On effectue plusieurs étapes de brisure des feuilles, une étape subséquente brisant les feuilles en morceaux plus petits qu'une étape précédente.

Dans la présente invention, on décrit un système pour le conditionnement de plantes alimentaires séchées, notamment de thé, dans une capsule hermétique. Le système comprend une machine pour briser des feuilles séchées de plantes alimentaires, notamment de thé, la machine comprenant une entrée pour une alimentation en feuilles séchées, une sortie pour la sortie des feuilles séchées brisées, et au moins un dispositif briseur comprenant un premier organe briseur et un deuxième organe briseur relativement amovible par rapport au premier organe briseur, les premier et deuxième organes briseurs étant configurés pour fléchir des feuilles séchées jusqu'à leur rupture par flexion. La machine peut avantageusement comprendre une source de gaz non-oxydant, tel que de l'azote, configurée pour alimenter l'environnement gazeux dans la machine afin d'éviter une oxydation des feuilles lors de la procédure de brisure jusqu'à leur insertion dans la capsule.

La machine comprend une pluralité de dispositifs briseurs, de préférence au moins trois dispositifs briseurs montés immédiatement l'un sur l'autre dans le sens de la force de gravité. Dans cette forme d'exécution, les feuilles brisées sont transportées d'un dispositif à l'autre par gravité. Toutefois, dans le cadre de cette invention, d'autres moyens de transport des feuilles entre les dispositifs briseurs successifs peuvent être employés, tels que des convoyeurs à bandes ou vibrants, ou par gaz soufflé.

Les dispositifs briseurs peuvent être disposés selon d'autres arrangements que verticalement, tels que horizontalement ou en cascade, ou même espacés les un des autres. Dans cette dernière variante, le processus de brisure des feuilles séchées peut être en chaîne ou en batch. Un processus en batch est séparé en plusieurs étapes indépendantes ou autonomes de brisure successive des feuilles en morceaux plus petits.

Dans une forme d'exécution, le premier organe briseur est amovible et comprend un rouleau entraîné en rotation par un moteur. Le rouleau peut comprendre des lignes actives avec une surface supérieure essentiellement cylindrique interrompue par des cavités configurées pour réceptionner des feuilles séchées, les lignes actives étant séparées par des cannelures entourant le rouleau. Les cavités comportent des surfaces radiales formant avec la surface supérieure des bords supérieurs, et les cannelures comportent des surfaces latérales formant avec les surfaces radiales des bords latéraux. La profondeur des cavités par rapport à la surface supérieure et la largeur des cavités, ainsi que la largeur des cannelures, peuvent avantageusement être différentes d'un dispositif briseur à l'autre, notamment en ce que la largeur des cavités et des cannelures diminue en taille d'un organe briseur en amont vers un organe briseur en aval.

Dans une forme d'exécution avantageuse, chacun des rouleaux est entraîné par un système d'entrainement contrôlé de manière à pouvoir varier la vitesse de chaque rouleau de la machine indépendamment. Le système d'entrainement peut avantageusement comprendre un moteur indépendant pour chaque rouleau.

Dans une forme d'exécution avantageuse, le deuxième organe briseur comprend une paroi briseuse comprenant des dents insérées dans les cannelures des rouleaux et des parties entre-dents au-dessus de la surface supérieure des rouleaux et espacées de cette surface par un jeu contrôlé. Des valeurs pour ce jeu peuvent se situer par exemple entre 0.001 mm et 1 mm.

Les dents, notamment du premier ou encore du deuxième dispositif briseur, peuvent avantageusement comprendre un bord d'attaque convexe, par exemple avec une forme en « V » avec un angle général *α* entre 80° et 160°.

La surface de fond des cannelures peut avantageusement être relevée par rapport à une surface de fond des cavités.

L'organe briseur statique peut être fixé à un guide d'entrée sous forme d'entonnoir pour guider les feuilles brisées sur la surface de l'organe briseur amovible.

Un angle *θ* de la paroi briseuse par rapport à un plan orthogonal à la surface du premier organe briseur peut se situer notamment entre -50° et +60°.

D'autres buts et aspects avantageux de l'invention ressortiront des revendications ou de la description détaillée d'une forme d'exécution ci-après en référence aux figures annexées, dans lesquelles :
La Fig. 1a est une vue en perspective d'une machine pour le conditionnement de feuilles séchées, notamment de thé, en capsules, selon une forme d'exécution de l'invention ;
La Fig. 1b est une vue en perspective de la machine avec une partie de la structure extérieure enlevée pour mieux illustrer la machine ;
La Fig. 2a est une vue en perspective d'une machine pour le conditionnement de feuilles séchées, notamment de thé, en capsules, selon une forme d'exécution de l'invention ;
La Fig. 2b est une vue de côté de la machine de la figure 2a ;
La Fig. 2c est une vue de face de la machine de la figure 2a
La Fig. 3 est une vue en perspective d'une partie de la machine de la figure 2a montrant un dispositif briseur vu du haut ;
La Fig. 4 est une vue de rouleaux d'un dispositif briseur vu du haut, d'une variante ;
La Fig. 5a est une vue en coupe détaillée et schématique d'un dispositif briseur d'une machine pour briser des feuilles séchées selon une forme d'exécution de l'invention ;
Les Fig. 5b et 5c illustrent des parties de variantes de rouleaux briseurs ;
La Fig. 5d est une illustration schématique montrant des dents d'une parois briseur engagent un rouleau briseur selon une variante;
La Fig. 5e est une illustration schématique permettant d'identifier les dimensions des dents et des cannelures d'un dispositif briseur selon une variante ;
La Fig. 6a est une vue en perspective d'un rouleau d'un dispositif briseur d'une machine selon une forme d'exécution de l'invention ;
La Fig. 6b est une vue plan du rouleau de la figure 6a ;
La Fig. 6c est une vue dans la direction de l'axe de rotation du rouleau de la figure 6a;
La Fig. 7a est une vue en perspective d'un rouleau briseur pour briser des feuilles en plus petits morceau que le rouleau briseur de la figure 6a;
La Fig. 7b est une vue plan du rouleau de la figure 7a ;
La Fig. 7c est une vue dans la direction de l'axe de rotation du rouleau de la figure 7a;
La Fig. 8a est une vue en perspective d'un rouleau d'un dispositif briseur d'une machine selon une autre forme d'exécution de l'invention ;
La Fig. 8b est une vue plan du rouleau de la figure 8a ;
La Fig. 8c est une vue dans la direction de l'axe de rotation du rouleau de la figure 8a.
La Fig. 9a est une vue en perspective d'une paroi briseuse d'une machine selon une forme d'exécution de l'invention ;
La Fig. 9b est une vue plan de la paroi de la figure 9a ;
La Fig. 9c est une vue dans la direction de la flèche C de la figure 9b;
La Fig. 9d est une vue dans la direction de la flèche D de la figure 9b;

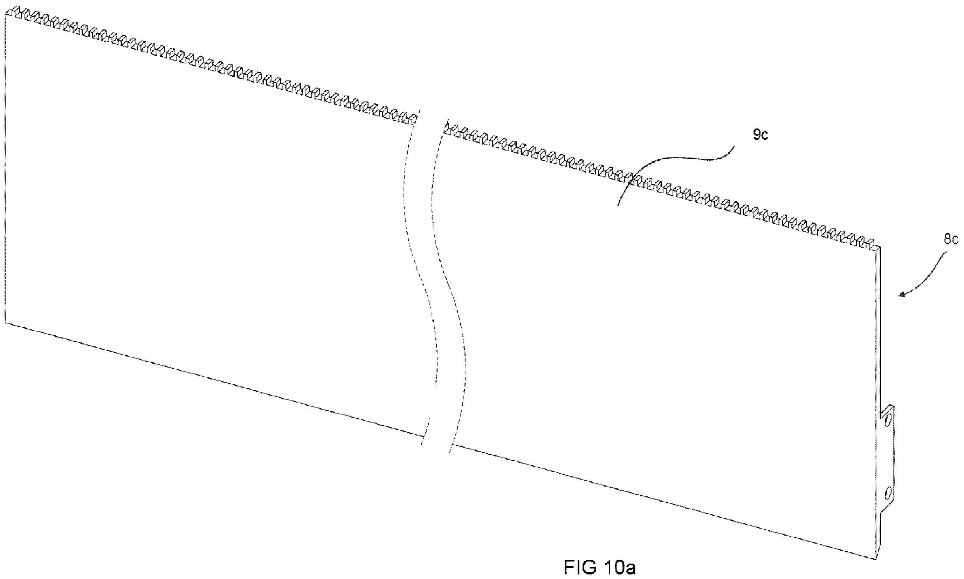

La Fig. 10a est une vue en perspective d'une paroi briseuse pour briser des feuilles en plus petits morceau que la paroi briseuse de la figure 9a;

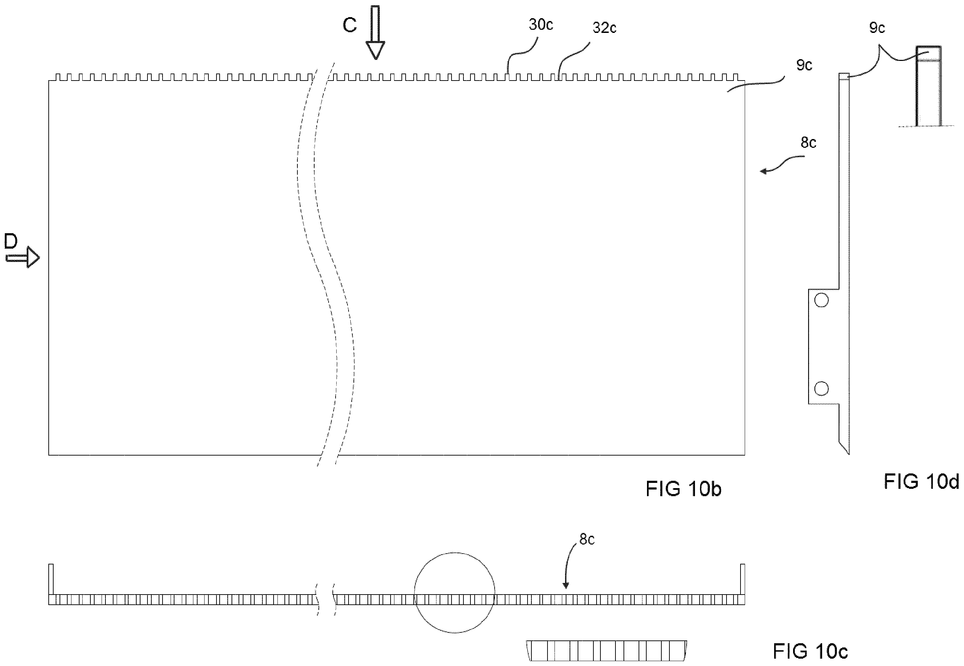

La Fig. 10b est une vue plan de la paroi briseuse de la figure 10a ;
La Fig. 10c est une vue dans la direction de la flèche C de la figure 10b; et
La Fig. 10d est une vue dans la direction de la flèche D de la figure 10b;

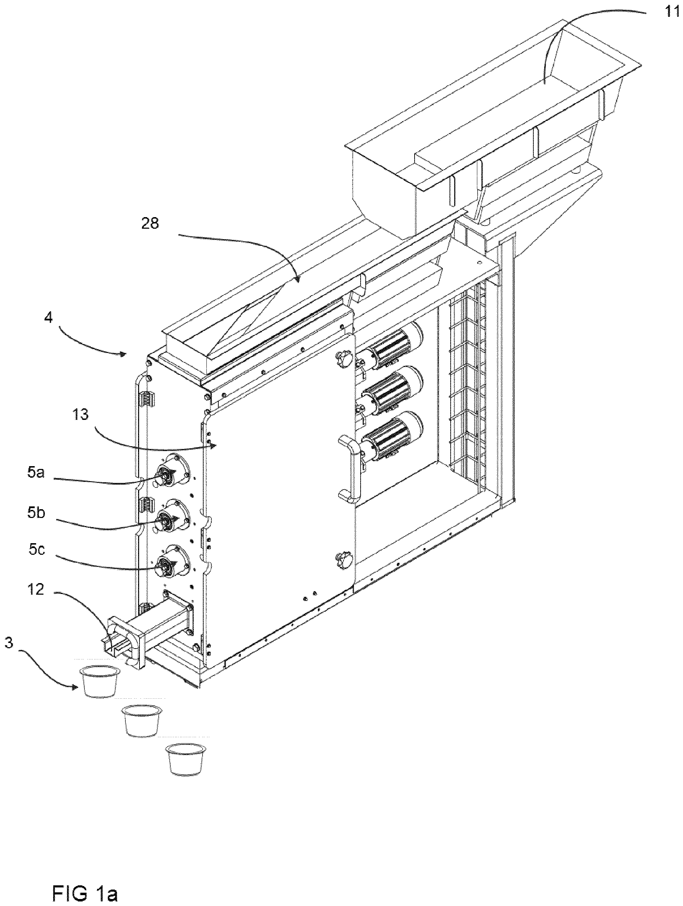

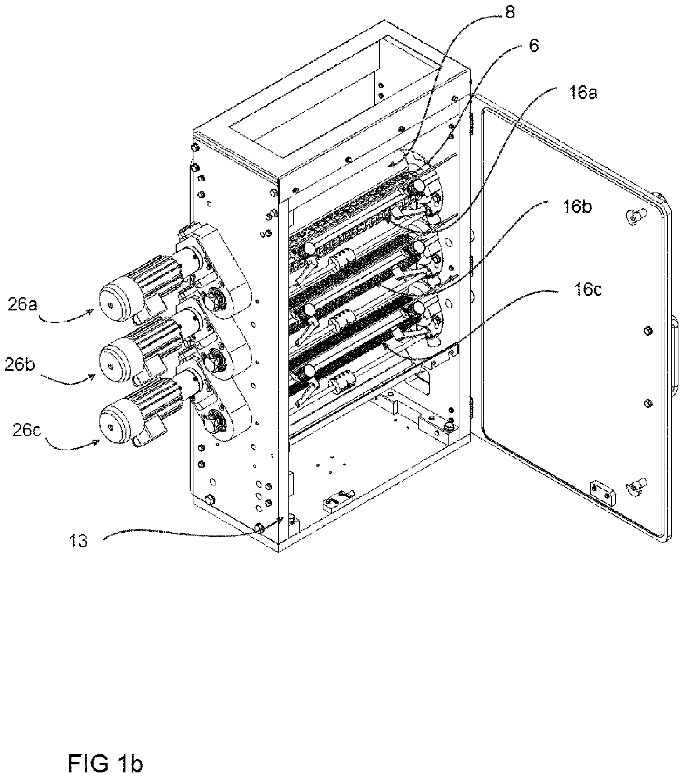

La Fig. 1a est une vue en perspective d'une machine 4 pour briser des feuilles séchées de plantes et plus particulièrement des feuilles de thé séchées, la machine faisant partie d'un système 1 pour le conditionnement des feuilles, et notamment de thé, dans une capsule 3 hermétique. La machine comprend une entrée 11 pour une alimentation en feuilles séchées, une sortie 12 pour la sortie des feuilles brisées et de guidage dans la capsule, et au moins un dispositif briseur 5a, 5b, 5c.

Dans la forme d'exécution illustrée, la machine 4 comprend une pluralité de dispositifs briseurs montés l'un sur l'autre verticalement. Il est également possible de disposer les dispositifs briseurs l'un à côté de l'autre horizontalement ou à différentes positions et d'avoir un mécanisme de transport, tel qu'un tapis convoyeur, pour transporter les feuilles d'un dispositif à l'autre.

Dans une forme d'exécution avantageuse, il y a trois dispositifs briseurs 5a, 5b, 5c.

Les dispositifs briseurs peuvent être montés dans une armoire 13, au moins en partie, l'intérieur de l'armoire étant alimenté par un gaz neutre, tel que de l'azote, afin d'éviter une oxydation des feuilles lors de la procédure de brisure jusqu'à leur insertion dans la capsule. Les capsules 3 sont donc également remplies d'un gaz neutre avant d'être scellées hermétiquement, cela permettant non seulement d'éviter l'oxydation des feuilles, mais également de préserver leur propriétés organoleptiques ainsi que de prévenir une activité microbienne. La machine 4 peut aussi être installée dans un sas avec un environnement contrôlé, notamment avec un gaz neutre tel que de l'azote remplissant le sas.

Dans une forme d'exécution, chaque dispositif briseur 5 comprend un organe briseur amovible 6 et un organe briseur statique 8.

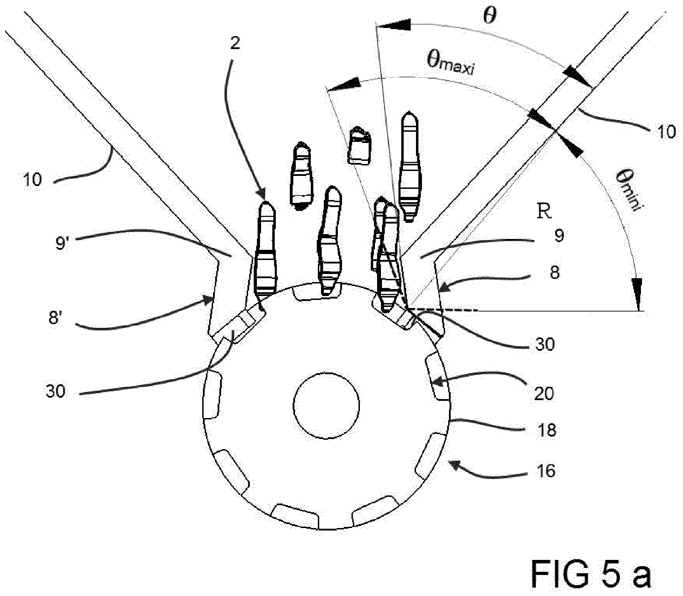

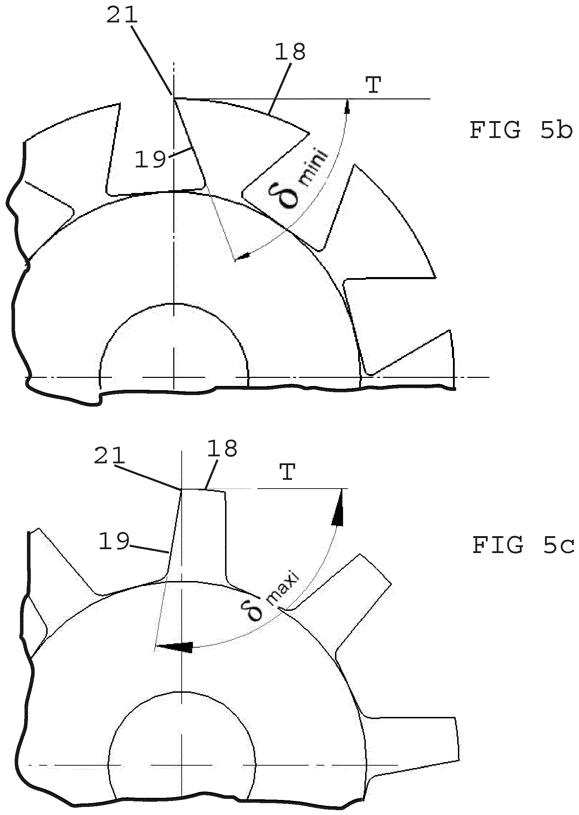

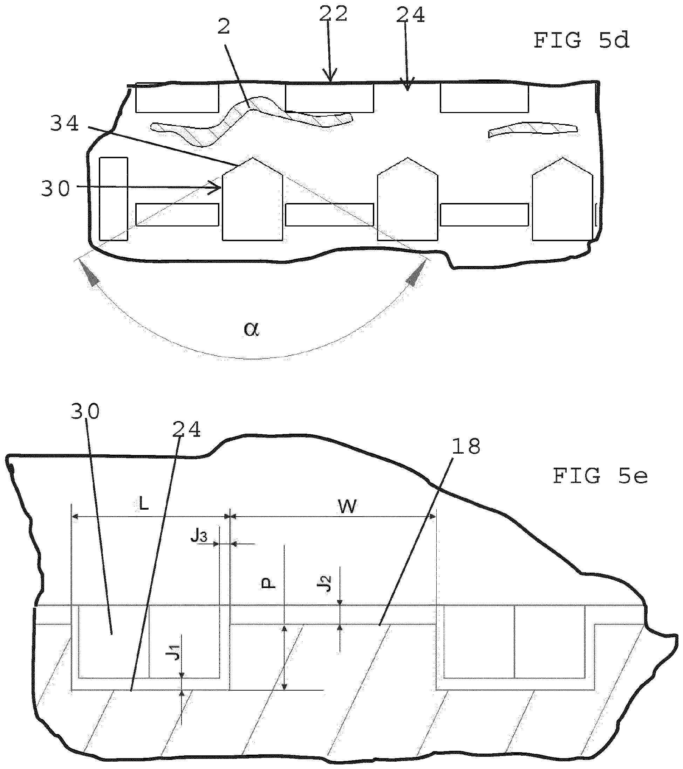

Dans une forme d'exécution avantageuse, l'organe briseur amovible 6 comprend un moteur 26 entraînant en rotation un rouleau 16a, 16b, 16c. Le rouleau comprend des lignes actives 22 avec une surface supérieure 18 cylindrique interrompue par des cavités 20, configurée pour réceptionner des feuilles 2 partiellement, tel qu'illustré dans la Fig. 5. Il y a une pluralité de lignes actives séparées par des cannelures 24 entourant le rouleau. Les cavités ont une surface de fond 17 et des surfaces radiales 19 formant avec la surface supérieure 18 des bords supérieurs 21. Les cannelures 24 ont une surface de fond 23 et des surfaces latérales 25 formant avec les surfaces radiales 19 des cavités 20 des bords latéraux 27.

Chacun des rouleaux peut être entraîné par un moteur 26a, 26b, 26c contrôlé indépendamment afin de pouvoir varier la vitesse de chaque rouleau de la machine indépendamment. En effet, la vitesse de rotation des rouleaux peut être déterminée empiriquement en fonction du type de feuille séchée à briser, par exemple du thé, mais également en fonction des différences au sein d'une même type de produit. Ces différences peuvent être de morphologie des feuilles séchées d'origine différente, ainsi que du taux d'humidité et de résistance à la cassure. Il est toutefois possible dans des variantes d'avoir un ou plusieurs moteurs travaillant à vitesse constante et d'avoir une boîte à vitesse ou système de couplage à vitesse variable et contrôlable couplant le moteur ou les moteurs aux rouleaux.

La profondeur *Pa, Pb, Pc* des cavités 20 par rapport à la surface supérieure 18 et la largeur *La, Lb, Lc* des cavités, ainsi que la largeur *Wa, Wb, Wc* des cannelures peut avantageusement être différente d'un dispositif briseur à l'autre. La largeur des cavités et des cannelures de l'organe briseur amovible du premier dispositif (l'organe supérieure) 6a sont plus grandes que celles du deuxième organe briseur amovible (l'organe intermédiaire) 6b qui sont plus grandes que celles du troisième organe briseur amovible (l'organe inférieur) 6c. La diminution des dimensions tient compte du fait que les feuilles de thé séchées sont brisées au fur et à mesure qu'elles passent du rouleau briseur au-dessus à celui en-dessous et diminuent en taille.

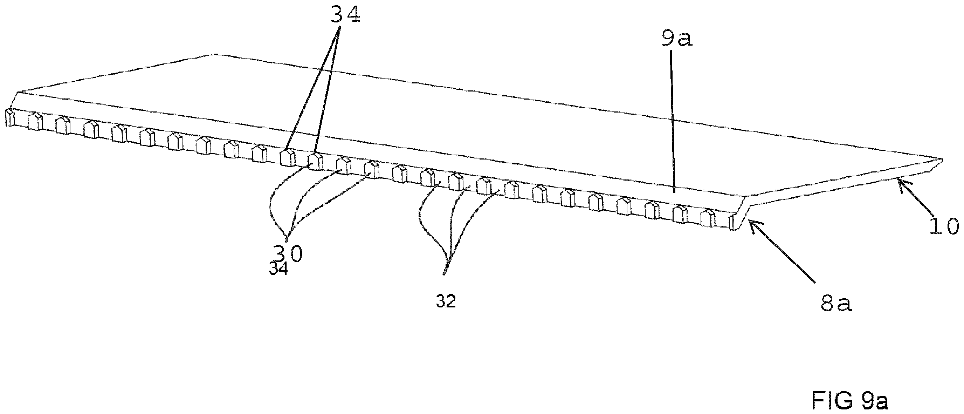

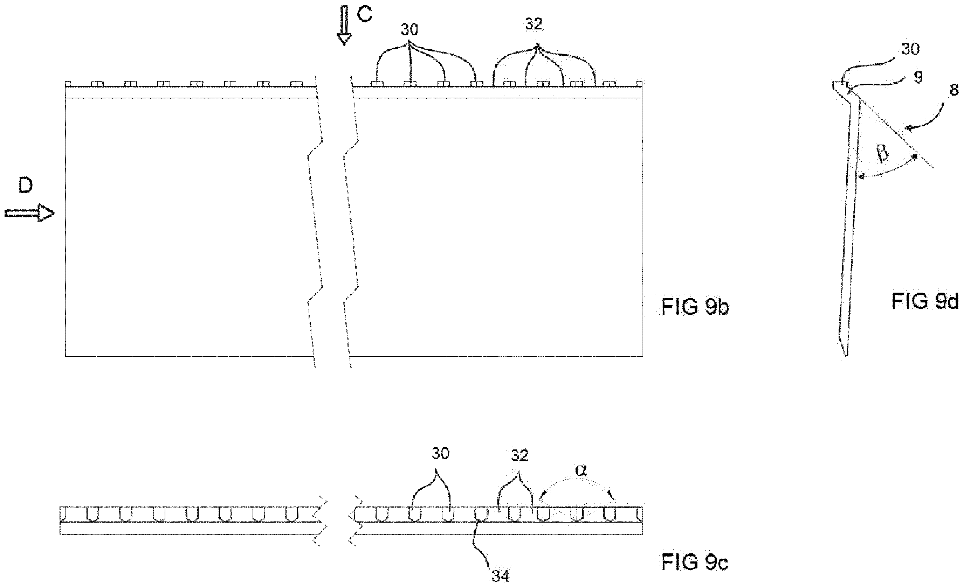

L'organe briseur statique 8, 8a, 8b, 8c comprend une paroi briseuse 9, 9a, 9b, 9c comprenant des dents 30, 30a, 30c insérées dans les cannelures 24 entre les lignes 22 et des parties entre-dents 32, 32a, 32c juste au-dessus de la surface supérieure et espacées de cette surface par un jeu déterminé et contrôlé. Les parties entre-dents 32 permettent de briser les bouts de feuilles de thé séchées projetant radialement au-delà des bords supérieurs 21 des cavités 20. Les dents 30 permettent de briser les bouts de feuilles de thé séchées 2 projetant latéralement des cavités 20 au-delà des bords latéraux 27. Les dents 30 sont aussi configurées pour pousser les feuilles tombant dans les cannelures 24 latéralement pour qu'elles engagent les bords latéraux 27 des cavités 20. A cet effet, les dents 30 peuvent avantageusement avoir un bord d'attaque 34 avec une forme convexe, par exemple en « V » (voir figures 5d, 9a, 9c), pour ramasser et pousser latéralement les feuilles de sorte à ce qu'elles tendent à s'engager avec un bout partiellement dans les cavités 20. Pour le premier rouleau 6a et le deuxième rouleau 6b, le bord d'attaque en « V » peut avoir un angle général α de préférence entre 80° et 160°, par exemple entre 110° et 130°. La surface de fond 25 de la cannelure 24 peut être, selon une variante, relevée par rapport à la surface de fond 17 des cavités, en d'autres termes à une profondeur moyenne par rapport à la surface supérieure 18, plus faible que la profondeur *Pa, Pb, Pc* des cavités 20. Cela permet de faciliter l'engagement des feuilles en partie dans les cavités 20 en les aidant à tomber dans les cavités. Le profil de la surface de fond 25 de la cannelure 24, vu dans une coupe longitudinale contenant l'axe de rotation *A* du rouleau, peut être essentiellement rectiligne, tel que illustré, ou légèrement convexe pour faciliter le glissement ou projection des feuilles de thé tombant dans les cannelures vers les cavités 20.

L'organe briseur statique 8 peut être formé intégralement ou fixé à un guide d'entrée 10 sous forme d'entonnoir pour guider les feuilles de thé brisées sur la surface de l'organe briseur amovible 6a, 6b, 6c, et pour des feuilles de thé giclées dans l'air lors de leur cassure, de les rediriger vers la surface de l'organe briseur amovible.

Dans un procédé avantageux, les feuilles séchées, entières ou essentiellement entières sont alimentées sur le premier rouleau 6a par un dispositif d'alimentation 28 configuré pour générer une pluie de feuilles distribuées de manière pas trop dense sur la surface de l'organe briseur amovible entre les parois d'entrée 10, et notamment entre les parois briseurs 9. Le dispositif d'alimentation peut comprendre une grille ou autre plateau vibrant permettant de libérer les feuilles les unes des autres et générer une pluie régulière et fine de feuilles séchées. En effet, si la densité de feuilles tombant sur le premier organe briseur amovible 6a est trop élevée, les cavités 20 peuvent être bouchées et une brisure optimale des feuilles ne se réalisera pas. Même si les cavités 20 ne se bouchent pas, une brisure optimale est réalisée lorsque seulement une, voire deux ou trois feuilles, se trouvent dans une cavité 20 pour éviter un empilement et une compression de feuilles entre les bords supérieurs 21 et latéraux 27 de la cavité 20 et l'organe briseur statique 8 au moment du croisement des bords avec l'organe briseur statique, ce qui pourrait diminuer l'efficacité de la brisure.

Faisant référence à la figure 5a, l'angle θ de la paroi briseuse 8 par rapport au à la direction radiale R, au point d'intersection de la paroi briseuse avec la surface supérieure 18 du rouleau, peut se situer notamment entre -50° (θ min) et +60° (θ max). Faisant référence aux figures 5b et 5c, l'angle δ entre la surface radiale 19 des cavités 20 et le plan tangente *T* à la surface supérieure 18 peut se situer notamment entre 30° et 125°. L'angle δ peut varier en fonction de l'angle θ puisque ces deux angles influence la position des points d'appui appliqués sur une feuille séchée coincée entre la paroi briseuse 9 et la dent 30 d'un côté, et le bord supérieure 21 de la surface radiale 19 de l'autre côté, ainsi que l'espace libre permettant la flexion de la feuille. Ce que l'on vise c'est de privilégier la rupture de la feuille par flexion par rapport à une rupture par cisaillement nette ou à une mouture des feuilles.

Faisant référence à la figure 5e, les jeux *j1, j2, j3* entre l'extrémité 30 de la paroi briseuse et la surface supérieure 18 de la ligne 22 de l'organe briseur amovible se situent de préférence entre 0.001 mm et 1 mm.

L'angle *θ* de la paroi briseuse 9, l'angle *α* du bord d'attaque des dents, ainsi que le jeu *j₁*, *j₂*, *j₃* et les dimensions des cavités 20 et des cannelures 24 sont configurés pour qu'une feuille de thé 2 tombant dans la cavité 20 soit coincée entre la paroi briseuse et le bord supérieur 21 ou le bord latéral 27 de la cavité 20 et pliée jusqu'à sa brisure lorsque le rouleau 6 tourne et la cavité se déplace au niveau de la paroi briseuse 9. La brisure d'une feuille se caractérise par une rupture soudaine et irrégulière de la feuille, notamment par flexion de la feuille séchée jusqu'à sa rupture, se distinguant d'une coupure ou un cisaillement nette de la feuille.

Dans le système de l'invention, l'on évite de moudre ou de couper ou cisailler les feuilles nettement. D'une part la surface effective exposée d'une feuille brisée étant irrégulière et rugueuse, elle est nettement plus grande que pour une feuille coupée. Très avantageusement, la cassure des feuilles de thé dans un environnement non-oxydant, à savoir sans oxygène, évite l'oxydation de la surface et offre une très grande capacité de la feuille à absorber de l'eau très rapidement pour pouvoir extraire les substances du thé pour la préparation d'une boisson. Non seulement on peut extraire ces substances très rapidement, mais en plus les arômes subtils sont préservés en évitant une oxydation des surfaces exposées lors de la brisure des feuilles. Par ailleurs, la surface d'une feuille de thé coupée ou moulue subit un fort échauffement local qui a pour effet de cicatriser la surface coupée ou moulue et de réduire sa capacité à absorber de l'eau rapidement et à libérer rapidement les substances solubles contenues dans la feuille de thé. La brisure génère moins d'énergie thermique à la surface brisée, et par conséquence cette surface reste plus poreuse à l'absorption de l'eau et à la libération des produits solubles. Aussi, en évitant un échauffement local à la surface brisée, on altère moins les arômes du thé.

Les feuilles de thé de différentes régions ont des propriétés mécaniques et des dimensions ainsi que des taux d'humidité différents, de sorte que les paramètres nécessaires pour briser les feuilles de manière optimale peuvent varier. A cet effet, la machine 4 dispose d'un système d'entrainement configuré pour contrôler la vitesse de rotation des organes briseurs amovibles, de préférence pour contrôler la vitesse de rotation de chacun des organes briseurs indépendamment. Le système d'entrainement peut comprendre un ou plusieurs moteurs et éventuellement un ou plusieurs mécanismes tels qu'une ou plusieurs boites à vitesse pour contrôler les vitesses de rotation. Dans la variante illustrée, la machine 4 comprend des moteurs 26a, 26b, 26c pour l'entraînement des organes briseurs amovibles 6a, 6b, 6c contrôlés indépendamment. La vitesse de chaque rouleau briseur est contrôlée par la vitesse de chaque moteur correspondant couplé au rouleau respectif. La vitesse optimale pour chacun des rouleaux briseurs peut être déterminée pour chaque type de thé par des mesures empiriques. Par exemple, les feuilles de thé très sèches et très cassantes peuvent être brisées avec des vitesses de rotation des rouleaux 16a, 16b, 16c plus rapides que pour des feuilles plus élastiques et moins cassantes. Aussi, l'on peut varier l'angle *θ* de la paroi ainsi que le jeu entre la surface supérieure et la partie entre-dent de la paroi briseuse pour s'adapter à l'élasticité, aux dimensions, à la densité, l'humidité et d'autres caractéristiques des feuilles de thé. L'on peut également remplacer les parois briseurs et les rouleaux pour changer les dimensions et angles des cannelures, cavités et dents, pour s'adapter aux dimensions et propriétés mécaniques du type des feuilles que l'on souhaite conditionner dans les capsules.

Quand les feuilles séchées 2 tombent dans les cavités, les parties qui s'étendent de la cavité au-delà de la surface supérieure 18, ou latéralement au-delà du bord, sont brisées lorsqu'elles s'engagent sur la paroi briseuse. Une partie d'une feuille brisée reste probablement dans la cavité et l'autre partie est probablement projetée dans l'air pour ensuite retomber sur la surface de l'organe briseur amovible. Si la partie projetée est toujours plus longue que la profondeur ou la largeur de la cavité 20, elle peut subir une nouvelle brisure. Pour la partie de feuille brisée restant dans la cavité 20 lors du passage de la cavité sous la paroi briseuse 9, cette partie de feuille tombe de la cavité dans le guide d'entrée 10b de l'organe briseur placé dessous pour une opération de brisure subséquente en plus petits morceaux. Par la pluralité d'organes briseurs amovibles disposés l'un sur l'autre, on peut donc exécuter une pluralité d'opérations de brisure de feuilles de thé en de plus petits morceaux à chaque opération afin de conditionner de petits morceaux de feuilles de thé brisées formant une très grande surface d'absorption non oxydée. Cela permet de diminuer le temps d'extraction des substances contenues dans le thé en moins de 30 secondes comparé à un temps d'extraction de plusieurs minutes pour un procédé de préparation de thé conventionnel. Aussi, on obtient une extraction de substances de plus grande qualité organoleptique que celle que l'on peut obtenir avec des feuilles de thé classiques. Dans une variante, l'on peut également monter les dispositifs briseurs horizontalement, l'un à côté de l'autre, ou espacés, en transportant les feuilles brisées d'un dispositif à l'autre avec un moyen de transport, tel qu'un convoyeur, une plaque vibrante ou un système de gaz soufflé.

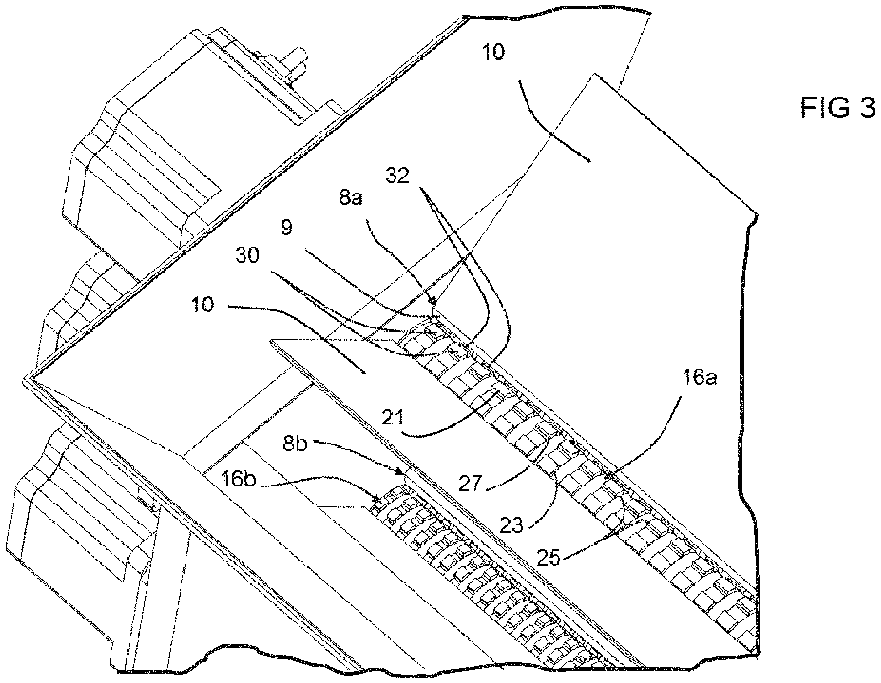

Les cavités 20 peuvent avoir des lignes actives et cannelures orthogonales à l'axe de rotation *A* tel qu'illustré à la figure 3, mais dans une variante (non-illustrée) les lignes actives et cannelures peuvent former une hélice autour du rouleau.

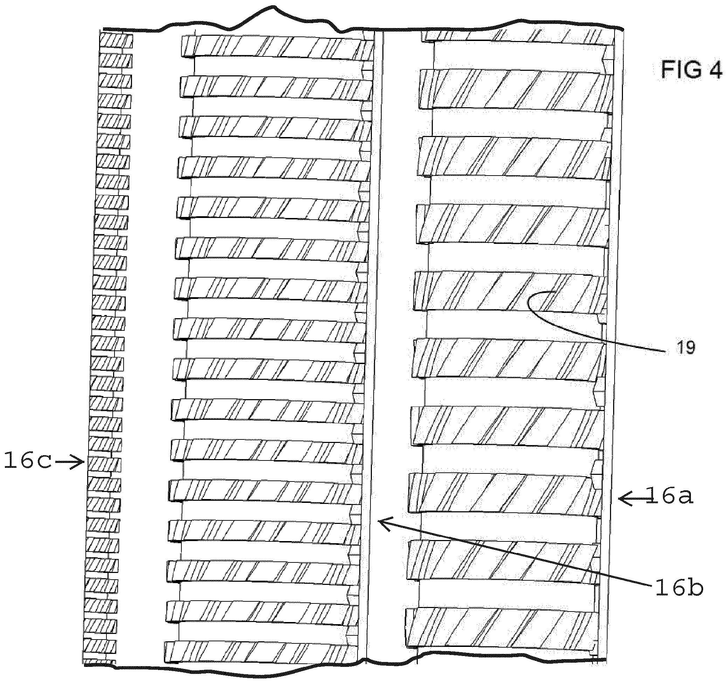

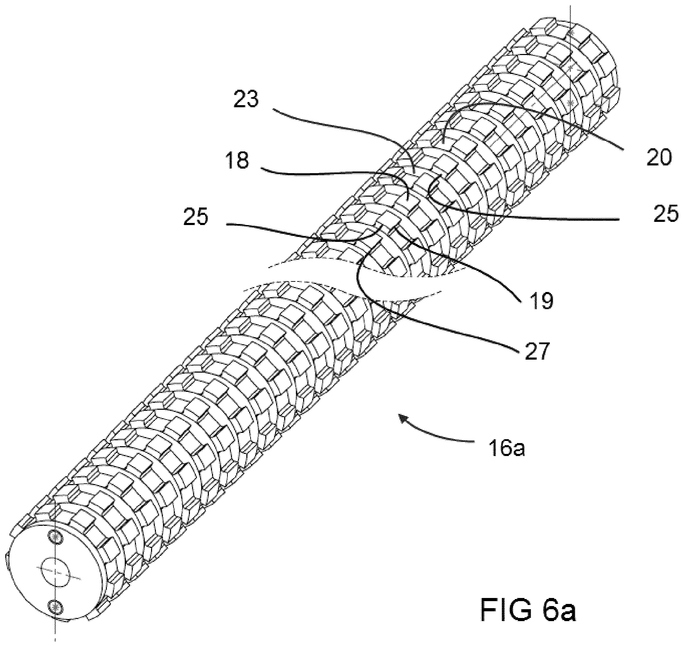

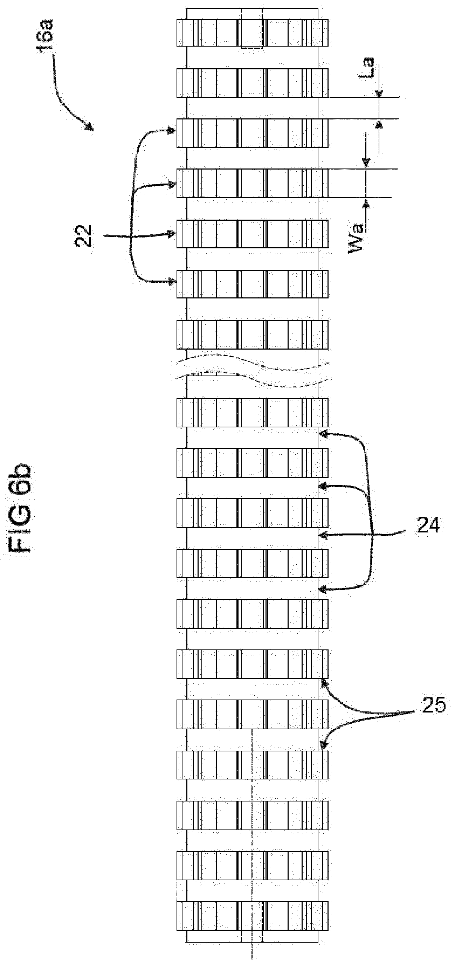

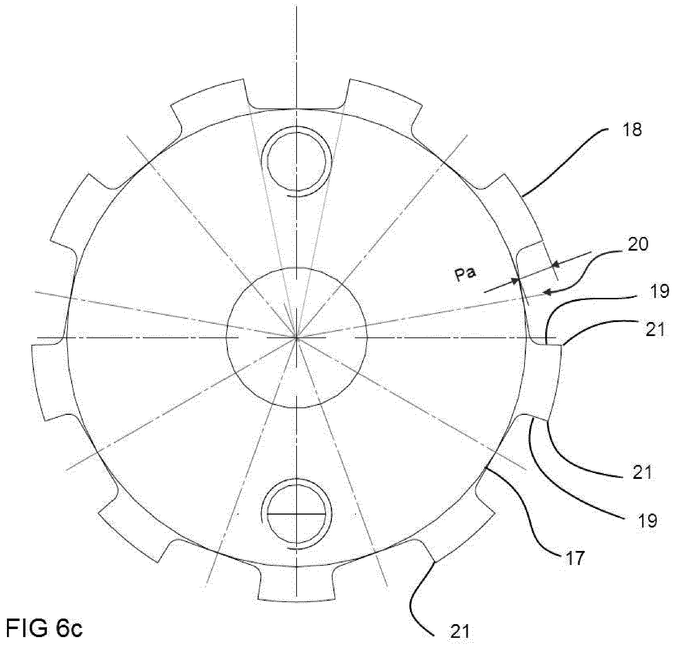

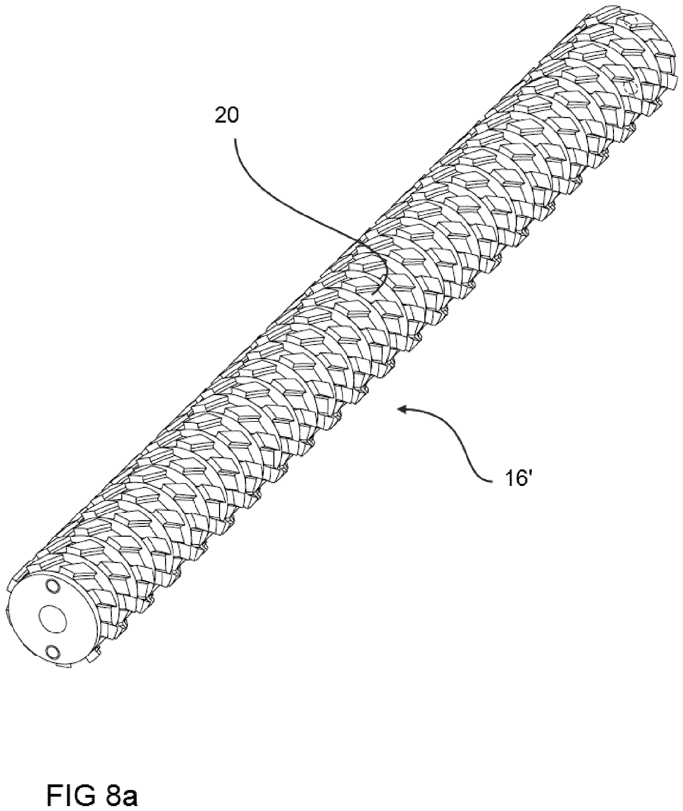

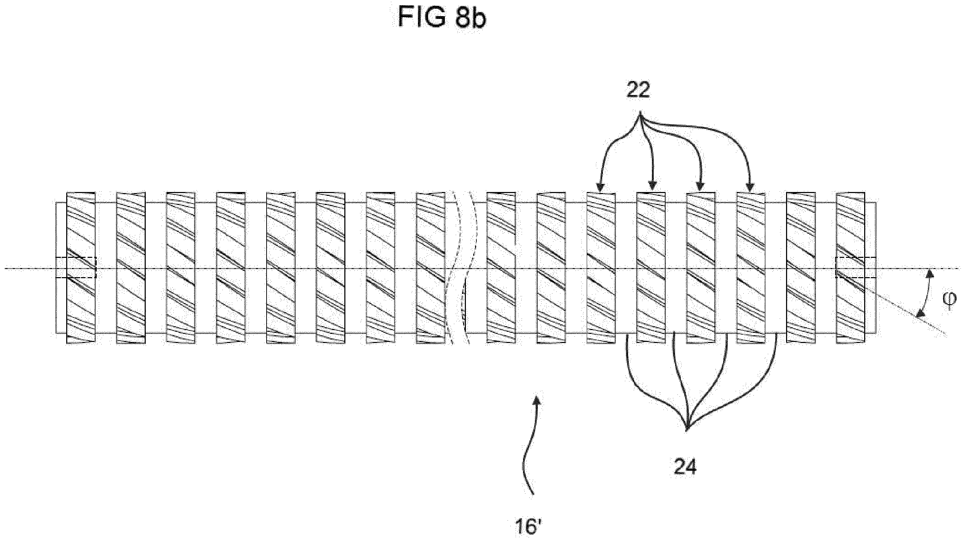

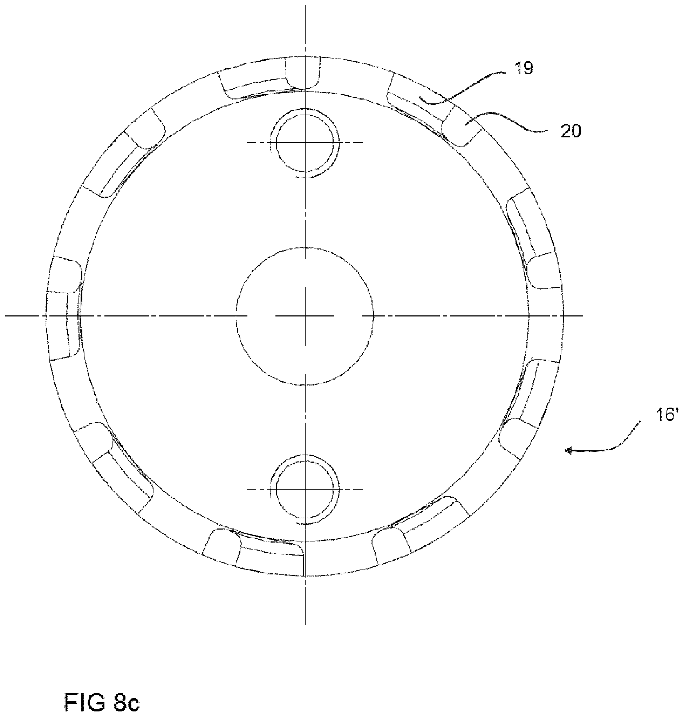

Les parois radiales 19 des cavités 20 de part et d'autre sont dans une variante essentiellement parallèles à l'axe de rotation des rouleaux, tel qu'illustré dans la forme d'exécution des figures 3 et 6a à 6c. Dans une autre variante, les parois 19 peuvent être inclinées, c'est-à-dire avoir un angle oblique *ϕ* par rapport à la direction de l'axe de rotation, tel qu'illustré dans les figures 4 et 8a à 8c, l'angle oblique *ϕ* étant de préférence entre 10° et 35° par rapport à la direction de l'axe de rotation. Un procédé pour briser les feuilles séchées de thé ou d'autres plantes peut être effectué par d'autres formes d'exécution d'organes briseurs que ceux illustrés. Au lieu d'un rouleau, l'organe briseur amovible peut être par exemple sous forme d'un organe essentiellement plat muni de cavités et oscillant en translation relative à une paroi briseuse. Les organes briseurs pourraient aussi être sous forme d'une paire de plaques ondulées ou en dents de scie complémentaires ou comprenant des cavités et protubérances complémentaires, les feuilles de thé séchées étant reçues dans les cavités d'une des plaques et les protubérances de l'autre plaque s'insérant dans les cavités pour plier les feuilles jusqu'à la rupture, en privilégiant une rupture par flexion sur une rupture par cisaillement net ou une mouture des feuilles. Il est également envisageable que les deux organes briseurs soit amovibles.

### Exemple :

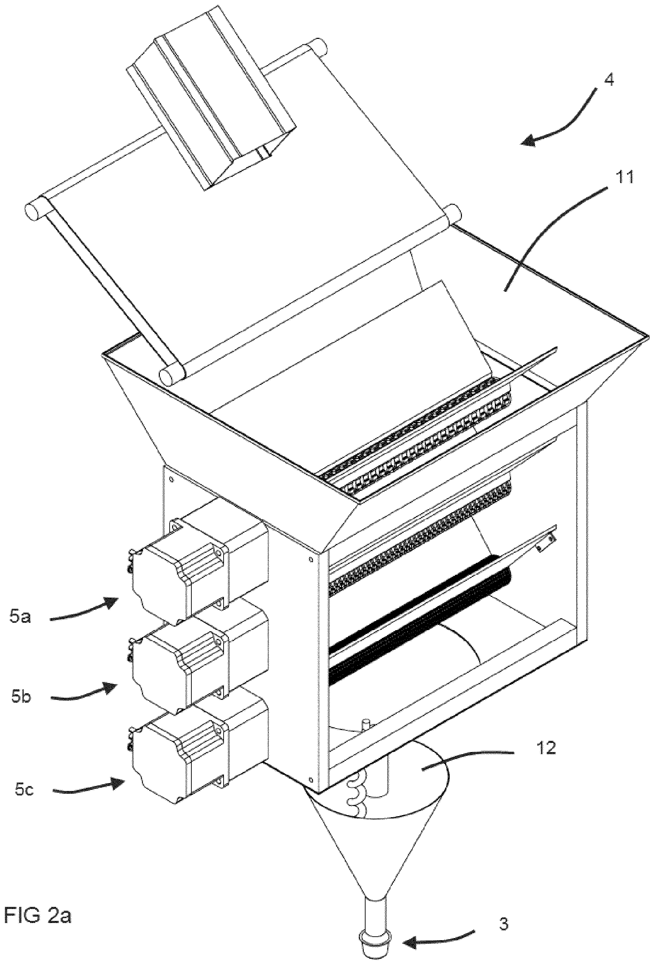

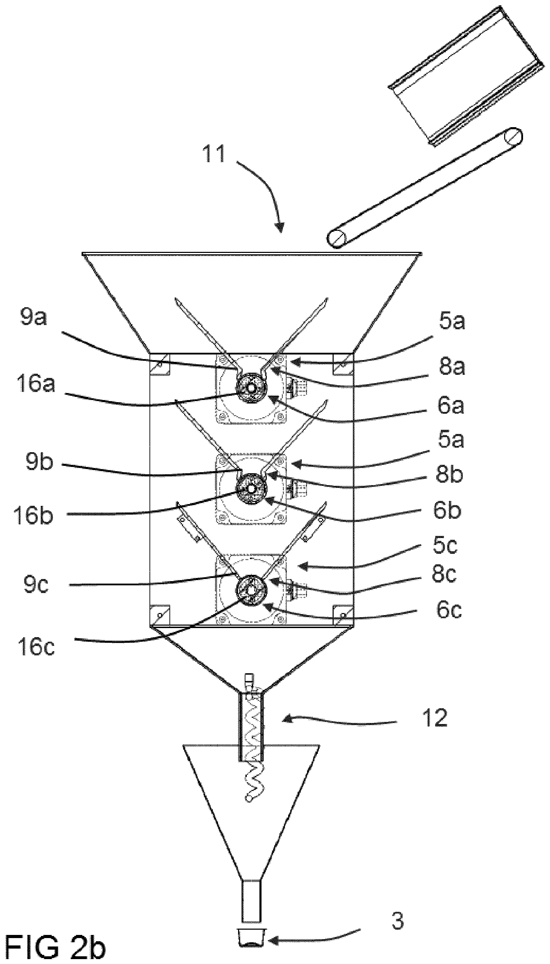

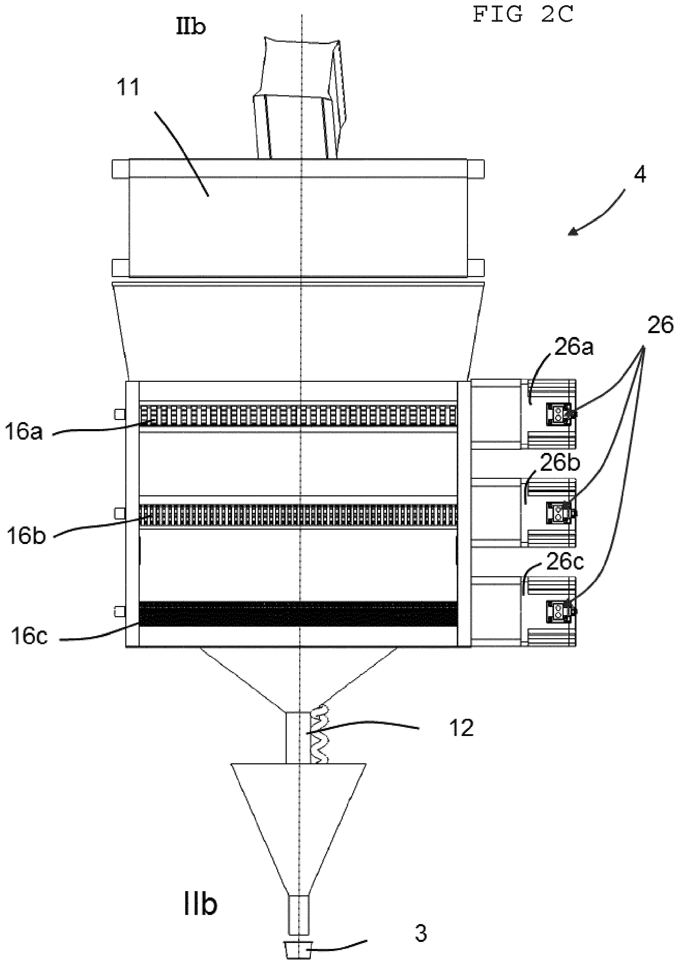

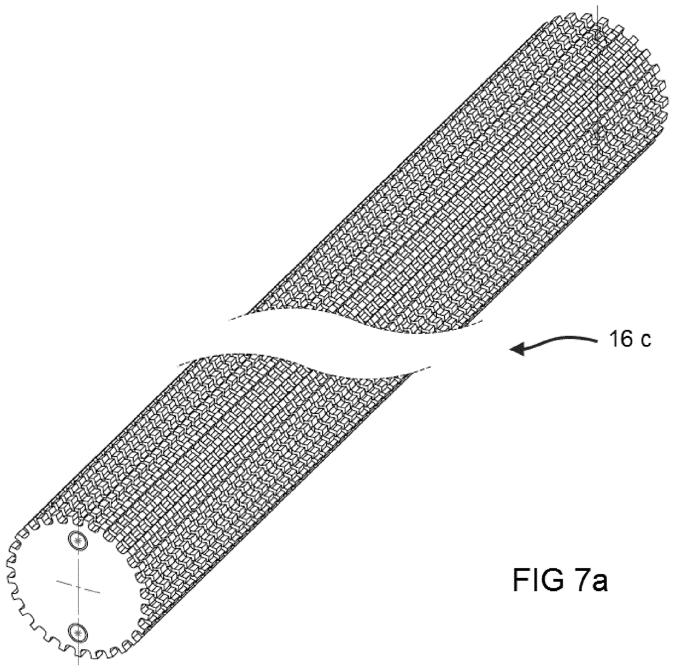

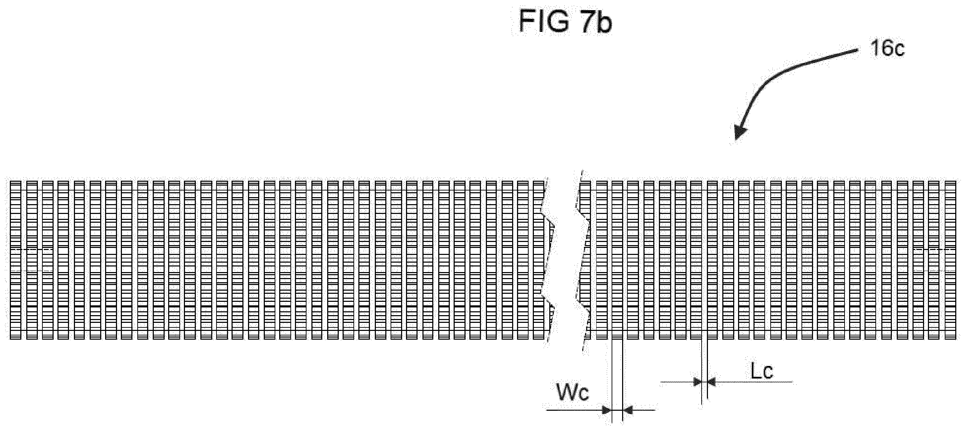

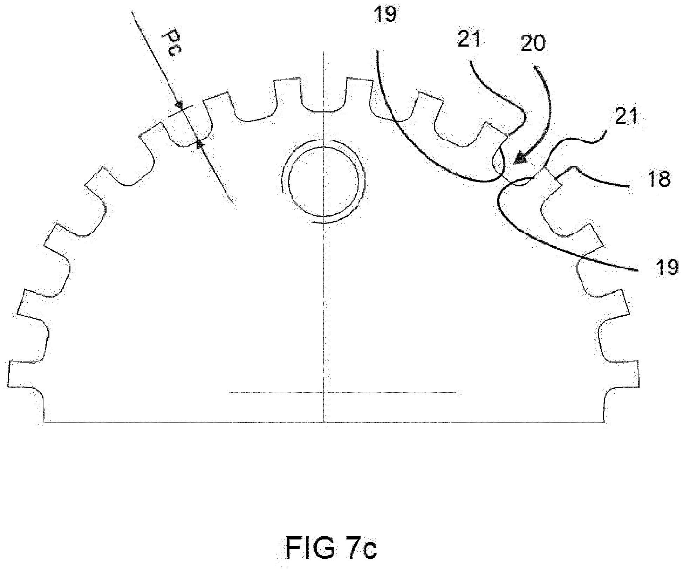

Un exemple d'une configuration spécifique des parois briseurs et rouleaux basée sur une forme d'exécution telle que illustrée dans les figures 1a à 2c pour le conditionnement de feuilles séchées de thé, peut avoir des paramètres (montrés dans les figures 5a-5e, 6b, 6c, 7b, 7c) avec des valeurs situées autour des valeurs suivantes :

| Paramètre | Premier Rouleau : | Deuxième Rouleau : | Troisième Rouleau : |
|---|---|---|---|
| α | 120° | 120° | 180° |
| θ | 48° | 48° | 0° |
| δ | 90° | 90° | 90° |
| W | 8.5 mm | 4.5 mm | 3 mm |
| P | 3 mm | 3 mm | 2.5 mm |
| L | 6.5 mm | 4.5 mm | 1.5 mm |
| J1 | 0.1 mm | 0.1 mm | 0.1 mm |
| J2 | 0.1 mm | 0.1 mm | 0.1 mm |
| J3 | 0.1 mm | 0.1 mm | 0.1 mm |

### Liste de références

2 feuille de plante séchée, notamment feuille de thé séché
3 capsule
1 système pour le conditionnement de thé
   4 machine pour briser les feuilles séchées
      11 entrée
      5, 5a, 5b, 5c dispositif briseur
         6, 6a,6b, 6c organe briseur amovible
            26a, 26b, 26c moteur
            16, 16a, 16b, 16c rouleau
               22 lignes
                  18 surface supérieure
                  20 cavités
                     17 surface de fond
                     19 surface radiale
                     21 bord supérieur
                     27 bord latéral
               24 cannelures
                  23 surface de fond
                  25 surface latérale
         8, 8a, 8b, 8c organe briseur statique
            9, 9a, 9b, 9c paroi briseuse
               30 dent
               32 partie entre-dent
               34 bord d'attaque
         10 guide d'entrée
      28 dispositif d'alimentation de feuilles
      13 armoire
      12 sortie

## Revendications

1. Système (1) pour le conditionnement de feuilles séchées (2) de plantes dans une capsule (3) hermétique, incluant une machine (4) pour briser des feuilles séchées, la machine comprenant une entrée (11) pour une alimentation en feuilles séchées, une sortie (12) pour la sortie des feuilles séchées brisées, et au moins un dispositif briseur (5a, 5b, 5c) comprenant un premier organe briseur (6) et un deuxième organe briseur (8) relativement amovible par rapport au premier organe briseur, les premier et deuxième organes briseurs étant configurés pour fléchir des feuilles séchées jusqu'à leur rupture par flexion, **caractérisé en ce que** la machine (4) comprend une pluralité de dispositifs briseurs (5a, 5b, 5c) de dimensions différentes montés l'un sur l'autre dans le sens de la force de gravité et configurés pour un traitement de brisure des feuilles séchées (2) en morceaux successivement plus petit.

2. Système selon la revendication 1 en ce que la machine (4) comprend une source de gaz neutre configurée pour alimenter l'environnement dans la machine afin d'éviter une oxydation des feuilles lors de la procédure de brisure jusqu'à leur insertion dans la capsule (3).

3. Système selon la revendication 1 ou 2 **caractérisé en ce que** la machine (4) comprend au moins trois dispositifs briseurs (5a, 5b, 5c).

4. Système selon l'une des revendications précédentes **caractérisé en ce que** le premier organe briseur est amovible et comprend un rouleau (16a, 16b, 16c) entrainé en rotation.

5. Système selon la revendication 4 **caractérisé en ce que** le rouleau (16a, 16b, 16c) comprend des lignes actives (22) avec une surface supérieure (18) interrompue par des cavités (20), configurée pour réceptionner des feuilles de thé (2), les lignes actives séparées par des cannelures (24) entourant le rouleau, les cavités ayant des surfaces radiales (19) formant avec la surface supérieure (18) des bords supérieurs (21) et les cannelures (24) ayant des surfaces latérales (25) formant avec les surfaces radiales (19) des bords latéraux (27).

6. Système selon la revendication 5 **caractérisé en ce que** la profondeur Pa, Pb, Pc des cavités (20) par rapport à la surface supérieure (18) et/ou la largeur La, Lb, Lc des cavités ainsi que la largeur Wa, Wb, Wc des cannelures sont différentes d'un dispositif briseur à l'autre.

7. Système selon la revendication 6 **caractérisé en ce que** la largeur des cavités (20) et des cannelures (24) d'un organe briseur amovible situé en aval est plus petite que celle d'un organe briseur amovible situé en amont.

8. Système selon l'une quelconque des revendications 4 à 7 **caractérisé en ce que** chacun des rouleaux (16a, 16b, 16c) est entrainé par un système d'entraînement (26a, 26b, 26c) contrôlé de manière à pouvoir varier la vitesse de chaque rouleau de la machine indépendamment.

9. Système selon l'une des revendications 4 à 8 **caractérisé en ce que** le deuxième organe briseur comprend une paroi briseuse (9) comprenant des dents (30) insérées dans les cannelures (24) et des parties entre-dents (32) au-dessus de la surface supérieure et espaces de cette surface par un jeu contrôlé.

10. Système selon la revendication 9 **caractérisé en ce qu'**un angle θ de la paroi briseuse par rapport à un plan orthogonal à la surface dudit premier organe briseur se situe entre -50° et +60°.

11. Système selon la revendication 9 ou 10 **caractérisé en ce que** les dents (30) comprennent un bord d'attaque (34) avec une forme convexe.

12. Système selon la revendication 11 **caractérisé en ce que** le bord d'attaque a une forme en « V » avec un angle général α entre 80° et 160°.

13. Système selon l'une quelconque des revendications 9 à 12 **caractérisé en ce que** l'organe briseur statique est fixé à un guide d'entrée (10) sous forme d'entonnoir pour guider les feuilles brisées sur la surface de l'organe briseur amovible.

14. Procédé de conditionnement de feuilles séchées (2) de plantes dans une capsule hermétique, comprenant la brisure des feuilles séchées, la brisure comprenant une flexion des feuilles séchées jusqu'à leur rupture par flexion,
**caractérisé en ce que**
le procédé utilise un système (1) selon l'une quelconque des revendications 1 à 13, et **en ce que** le procédé comprend plusieurs étapes de brisure de feuilles séchées, une étape subséquente brisant les feuilles en morceaux plus petits qu'une étape précédente, la brisure des feuilles séchées dans un environnement de gaz non-oxydant, l'insertion des feuilles ainsi brisées dans une capsule (3) dans un environnement de gaz non-oxydant, et la fermeture hermétique de la capsule (3).

15. Procédé selon la revendication 14 **caractérisé en ce que** les feuilles séchées (2) de plantes sont des feuilles de thé séchées.

## Patentansprüche

1. System (1) zum Verpacken von getrockneten Blättern (2) von Pflanzen in eine hermetisch verschlossene Kapsel (3), umfassend eine Maschine (4) zum Brechen der getrockneten Blätter, wobei die Maschine einen Eingang (11) für eine Zufuhr der getrockneten Blätter, einen Ausgang (12) für die Ausgabe der gebrochenen getrockneten Blätter, und mindestens eine Brecher-Vorrichtung (5a, 5b, 5c) umfasst, welche ein erstes Brecher-Organ (6) und ein zweites, in Bezug auf das erste Brecher-Organ entfernbares, Brecher-Organ (8) umfasst, wobei das erste und zweite Brecher-Organ dazu eingerichtet sind, getrocknete Blätter bis zu ihrem Bruch zu biegen,
**dadurch gekennzeichnet, dass**
die Maschine (4) eine Mehrzahl von Brecher-Vorrichtungen (5a, 5b, 5c) mit unterschiedlicher Abmessung umfasst und wobei die Brecher-Vorrichtungen eine über der anderen in Richtung der Gravitationskraft angebracht sind und eingerichtet sind zum Brechen der getrockneten Blätter (2) in zunehmend kleinere Stücke.

2. System nach Anspruch 1, **dadurch gekennzeichnet, dass** die Maschine (4) eine Quelle von neutralem Gas umfasst, welche dazu eingerichtet ist, die Umgebung in der Maschine zu versorgen, um eine Oxydation der Blätter oder Stängel beim Vorgang des Brechens bis zu ihrem Einbringen in die Kapsel (3) zu verhindern.

3. System nach einem der Ansprüche 1 oder 2, **dadurch gekennzeichnet, dass** die Maschine (4) mindestens drei Brecher-Vorrichtungen (5a, 5b, 5c) umfasst.

4. System nach einem der vorangehenden Ansprüche, **dadurch gekennzeichnet, dass** das erste Brecher-Organ entfernbar ist und eine Walze (16a, 16b, 16c) umfasst, welche zu einer Drehbewegung angetrieben ist.

5. System nach Anspruch 4, **dadurch gekennzeichnet, dass** die Walze (16a, 16b, 16c) aktive Linien (22) mit einer durch Ausnehmungen (20), welche dazu eingerichtet sind, Blätter von Tee (2) aufzunehmen, unterbrochenen oberen Oberfläche (18) umfasst, wobei die aktiven Linien durch Nuten (24), welche um die Walze herum verlaufen, getrennt sind, wobei die Ausnehmungen radiale Oberflächen (19) haben, welche mit der oberen Oberfläche (18) obere Kanten (21) bilden und wobei die Nuten (24) seitliche Oberflächen (25) haben, welche mit den radialen Oberflächen (19) seitliche Kanten (27) bilden.

6. System nach Anspruch 5, **dadurch gekennzeichnet, dass** die Tiefe Pa, Pb, Pc der Ausnehmungen (20) in Bezug auf die obere Oberfläche (18) und/oder die Breite La, Lb, Lc der Ausnehmungen, so wie die Breite Wa, Wb, Wc der Nuten von einer Brecher-Vorrichtung zur nächsten verschieden sind.

7. System nach Anspruch 6, **dadurch gekennzeichnet, dass** die Breite der Ausnehmungen (20) und der Nuten (24) eines entfernbaren Brecher-Organs, welches stromabwärts angeordnet ist, kleiner ist, als diejenige eines entfernbaren Brecher-Organs, welches stromaufwärts angeordnet ist.

8. System nach einem der Ansprüche 4 bis 7, **dadurch gekennzeichnet, dass** jede der Walzen (16a, 16b, 16c) durch ein Antriebssystem (26a, 26b, 26c) angetrieben ist, welches derart angesteuert ist, dass die Geschwindigkeit jeder Walze der Maschine unabhängig verändert werden kann.

9. System nach einem der Ansprüche 4 bis 8, **dadurch gekennzeichnet, dass** das zweite Brecher-Organ eine Brecher-Wand (9) umfasst, welche in die Nuten (24) eingeschobene Zähne (30) und über der oberen Oberfläche und von dieser Oberfläche durch eine kontrolliertes Spiel beabstandete Zwischenzahn-Bereiche (32) umfasst.

10. System nach Anspruch 9, **dadurch gekennzeichnet, dass** ein Winkel θ der Brecher-Wand in Bezug auf eine zur Oberfläche des besagten ersten Brecher-Organs senkrechte Ebene zwischen -50° und +60° liegt.

11. System nach Anspruch 9 oder 10, **dadurch gekennzeichnet, dass** die Zähne (30) eine Vorderkante (34) mit einer konvexen Form umfassen.

12. System nach Anspruch 11, **dadurch gekennzeichnet, dass** die Vorderkante eine "V"-Form mit einem allgemeinen Winkel α zwischen 80° und 160° hat.

13. System nach einem der Ansprüche 9 bis 12, **dadurch gekennzeichnet, dass** das feststehende Brecher-Organ an einer Einlass-Führung (10) in der Form eines Trichters angebracht ist, um die gebrochenen Blätter auf die Oberfläche des entfernbaren Brecher-Organs zu führen.

14. Verfahren zur Verpackung getrockneter Blätter (2) von Pflanzen in eine hermetisch verschlossen Kapsel, umfassend das Brechen der getrockneten Blätter, wobei das Brechen eine Biegung der getrockneten Blätter bis zu ihrem Bruch durch Biegung umfasst,
**dadurch gekennzeichnet, dass**
das Verfahren ein System (1) nach einem der Ansprüche 1 bis 13 verwendet, und dass das Verfahren
mehrere Etappen des Brechens von getrockneten Blättern, wobei eine nachfolgende Etappe die Blätter in kleinere Stücke bricht als eine vorangehende Etappe,
das Brechen der getrockneten Blätter in einer Umgebung aus nicht-oxydierendem Gas, das Einfüllen der so gebrochenen Blätter in eine Kapsel (3) in einer Umgebung aus nicht-oxydierendem Gas, und
das hermetische Verschliessen der Kapsel (3) umfasst.

15. Verfahren nach Anspruch 14, **dadurch gekennzeichnet, dass** die getrockneten Blätter (2) von Pflanzen getrocknete Teeblätter sind.

## Claims

1. System (1) for packaging dried leaves (2) of plants in a hermetically sealed casing (3), the system including a machine (4) for breaking dried leaves, the machine comprising an inlet (11) for supplying the dried leaves, an outlet (12) for releasing the broken dried leaves, and at least one breaker device (5a, 5b, 5c) including a first breaker member (6) and a second breaker member (8) that can be removed relative to the first breaker member, wherein the first and second breaker members are configured to bend the dried leaves until they break,
**characterized in that** the machine (4) comprises multiple breaker devices (5a, 5b, 5c) of different dimensions, the breaker devices being assembled one on top of the other in the direction of the gravitational force and designed to break the dried leaves (2) into pieces of gradually decreasing size.

2. System according to claim 1, **characterized in that** the machine (4) comprises a source of neutral gas designed to provide an environment in the machine, which prevents the oxidation of the leaves from the time of breaking until their insertion into the casing (3).

3. System according to one of the claims 1 or 2, **characterized in that** the machine (4) comprises at least three breaker devices (5a, 5b, 5c).

4. System according to one of the preceding claims, **characterized in that** the first breaker member is removable and comprises a roller (16a, 16b, 16c) that is caused to rotate.

5. System according to claim 4, **characterized in that** the roller (16a, 16b, 16c) comprises active lines (22) with a top surface (18) interrupted by cavities (20) designed to catch the tea leaves (2), the active lines being separated by grooves (24) around the roller, the cavities having radial surfaces (19) forming upper edges (21) with the top surface (18) and the grooves (24) having lateral surfaces (25) forming side edges (27) with the radial surfaces (19).

6. System according to claim 5, **characterized in that** the depth Pa, Pb, Pc of the cavities (20) in relation to the top surface (18) and/or the width La, Lb, Lc of the cavities of the breaker devices as well as the width Wa, Wb, Wc of the grooves of the breaker devices is different from one breaker device to another.

7. System according to claim 6, **characterized in that** the width of the cavities (20) and the grooves (24) of a removable breaker member located downstream is smaller than that of a removable breaker member located upstream.

8. System according to any one of claims 4 to 7, **characterized in that** each of the rollers (16a, 16b, 16c) is driven by a driver system (26a, 26b, 26c) controlled so that the speed of each roller of the machine can be adjusted separately.

9. System according to any one of claims 4 to 8, **characterized in that** the second breaker member comprises a breaker wall (9) with teeth (30) inserted into the grooves (24) and tooth spacings (32) above the upper surface, allowing specific clearance from this surface.

10. System according to claim 9, **characterized in that** one angle θ of the breaker wall in relation to an orthogonal plane on the surface of the said first breaker member is between -50° and +60°.

11. System according to claim 9 or 10, **characterized in that** the teeth (30) comprise a convex-shaped leading edge (34).

12. System according to claim 11, **characterized in that** the leading edge forms a "V" shape and has a general angle α of between 80° and 160°.

13. System according to any one of claims 9 to 12, **characterized in that** the static breaker member is attached to an inlet guide (10) in the shape of a funnel to guide the broken leaves onto the surface of the removable breaker member.

14. Method of packaging dried leaves (2) of plants in a hermetically sealed casing, involving breaking the dried leaves, wherein breaking the dried leaves involves bending them until they break,
**characterized in that** the method uses a system (1) according to any one of claims 1 to 13 and **in that** the method comprises several stages for breaking the dried leaves, each subsequent stage breaking the leaves into smaller pieces than the previous stage, breaking the dried leaves or stalks in an environment of non-oxidising gas, inserting the broken leaves into a casing (3) in an environment of non-oxidising gas, and hermetically sealing the casing (3).

15. Method according to claim 14, **characterized in that** the dried plant leaves (2) are dried tea leaves.
